# EUROPEAN PATENT APPLICATION

(11) **EP 4 814 077 A1**
(43) Date of publication of application: **30.09.2026**
(21) Application number: 26167504.5
(22) Date of filing: 25.03.2026
(51) Int. Cl.: C09K 5/10, H01M 10/613, H01M 10/6567

(54) **ADDITIVES FOR THERMAL MANAGEMENT FLUID AND THERMAL MANAGEMENT FLUID COMPOSITIONS INCLUDING SAME**

(30) Priority: 25.03.2025 KR 20250038278; 17.10.2025 KR 20250150847
(71) Applicant: SK Innovation Co., Ltd., Seoul 03188 (KR); SK On Co., Ltd., Seoul 03161 (KR)
(72) Inventor: JUNG, Kang Min, 34124 Daejeon (KR); KIM, Hak Mook, 34124 Daejeon (KR); KIM, Ki Wan, 34124 Daejeon (KR); SHIN, Sang Hye, 34124 Daejeon (KR); LEE, Hong Won, 34124 Daejeon (KR); LEE, Dong Gun, 34124 Daejeon (KR); LEE, Jung A, 34124 Daejeon (KR)
(74) Representative: Prüfer & Partner mbB Patentanwälte · Rechtsanwälte

(57) **Abstract**

Proposed is an additive composition for a thermal management fluid, the composition including a phosphorus-based additive and a silicon-based additive. Further proposed is a thermal management fluid composition including the additive composition.

## Description

### BACKGROUND OF THE INVENTION

### Field of the Invention

The present disclosure relates to an additive composition for a thermal management fluid, and to a thermal management fluid composition including the same.

### Description of the Related Art

Thermal management fluids refer to fluids designed to efficiently transfer and regulate thermal energy, and are primarily employed in cooling and heating systems.

A coolant functions to absorb heat generated from a heat source, thereby reducing the temperature of the heat source. Desirable properties of a coolant include high thermal efficiency, low viscosity, low cost, non-toxicity, chemical stability, and non-corrosiveness toward system components.

As electronic products such as electric vehicles continue to achieve higher performance levels, an increasing amount of heat is generated during their operation. To ensure reliable operation and to prevent a reduction in product lifespan, effective thermal control of heat generated within such products has become an essential consideration.

Immersion cooling is one of the cooling methods used for thermal management of electronic devices and computer systems. In immersion cooling, electronic devices are cooled through direct contact with a fluid, which enables more effective heat removal compared to conventional air-cooling or water-cooling methods.

Meanwhile, higher capacity batteries in modern electronic products face increased thermal runaway risks, with the danger of causing battery fires. In an immersion cooling system, a thermal management fluid cools a battery by fully submerging the battery in the fluid, which isolates the battery from atmospheric oxygen and suppresses potential battery fires to a certain extent by creating an oxygen-deprived environment.

The foregoing is intended merely to aid in the understanding of the background of the present disclosure, and is not intended to mean that the present disclosure falls within the disclosure of the related art that is already known to those skilled in the art.

### Documents of Related Art

(Patent document 1) Korean Patent Application Publication No. 10-2019-0041997

### SUMMARY OF THE INVENTION

According to the present disclosure, there is provided an additive composition capable of improving fire propagation prevention performance of a thermal management fluid.

According to another aspect of the present disclosure, there is provided a thermal management fluid composition including the additive composition

An additive composition for a thermal management fluid according to one aspect of the present disclosure may include: a phosphorus-based additive; and a silicon-based additive.

According to one embodiment, the phosphorus-based additive may have a molecular weight of 100 to 500 g/mol preferably 100 to 400 g/mol, more preferably 100 to 300 g/mol, and even more preferably 150 to 300 g/mol.

According to one embodiment, the phosphorus-based additive includes a phosphate-based compound, preferably organic phosphate compound.

According to one embodiment, the phosphorus-based additive may include a compound represented by Chemical Formula 1 below:

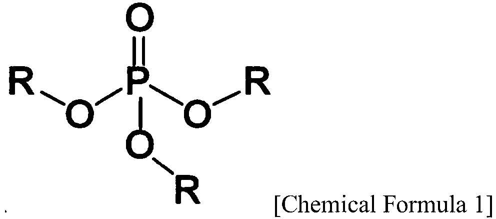

Here, each R may independently be hydrogen or a functional group having 1 to 30 carbon atoms, at least one R may not be hydrogen, and a total number of carbon atoms in the compound may be 1 to 30.

Preferably, the functional group is an hydrocarbyl group.

More preferably, the functional group is an alkyl group, which optionally includes a heteroatom, preferably selected from O, N, S, P, B, F, Cl, Br, I, or a combination thereof. More preferably, the functional group includes a halogen atom, in particular F.

According to one embodiment, the silicon-based additive has a molecular weight of equal to or less than 2,000 g/mol, preferably 500 to 1,800 g/mol, more preferably 500 to 1,600 g/mol, even more preferably 600 to 1,500 g/mol, and still more preferably 700 to 1,400 g/mol.

According to one embodiment, the silicon-based additive may include a compound represented by Chemical Formula 2 below:

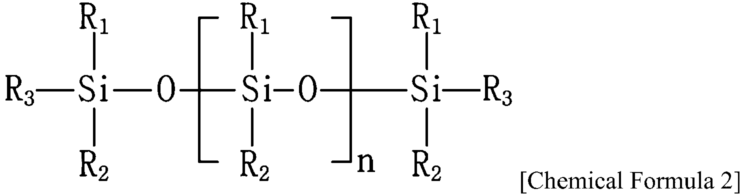

Here, functional groups R₁, R₂, and R₃ may each independently be selected from the group consisting of hydrogen, a hydroxyl group, an alkyl group, an alkenyl group, an alkynyl group, an aryl group, and an alkoxy group, and n may be an integer of equal to or greater than 1, preferably 1 to 30, more preferably 3 to 20, even more preferably 5 to 16.

According to one embodiment, the R₁ may be an alkyl group or an aryl group, and the R₂ and R₃ may each independently be alkyl groups.

According to one embodiment, a weight ratio of the phosphorus-based additive to the silicon-based additive may be 1:6 to 10:1.

A thermal management fluid composition of the present disclosure may include: a base oil, and a additive composition as mentioned before (i.e. containing a phosphorus-based additive, and a silicon-based additive).

According to one embodiment, the base oil may include mineral oil, synthetic oil, vegetable oil, or a combination thereof.

According to one embodiment, the thermal management fluid composition may include: 85 to 98 wt% of the base oil; equal to or less than 10 wt% of the phosphorus-based additive; and equal to or less than 10 wt% of the silicon-based additive.

According to one embodiment, the thermal management fluid composition may have a flash point of at least 200°C.

According to one embodiment, the thermal management fluid composition may further include: a third additive. Here, the third additive may include an antioxidant, an antifoaming agent, a corrosion inhibitor, a detergent, a dispersant, a friction modifier, an antiwear agent, an extreme-pressure additive, a viscosity index improver, a pour-point depressant, a viscosity modifier, or a combination thereof.

According to another embodiment, application of the additives can improve fire propagation prevention performance of a thermal management fluid.

According to one embodiment, the additives can effectively maintain functionality even under high-temperature conditions such as thermal runaway.

According to one embodiment, application of the additives can enhance the flash point of a thermal management fluid.

According to one embodiment, a thermal management fluid to which the additives are applied can be used as an immersion-cooling fluid.

### DETAILED DESCRIPTION OF THE INVENTION

Hereinafter, the present disclosure will be described in detail. However, the following description is merely illustrative, and the present disclosure is not limited to the specific embodiments exemplarily described herein.

### Additive Composition for Thermal Management Fluid

The present disclosure provides an additive composition for a thermal management fluid. The additive composition includes a phosphorus-based additive and a silicon-based additive. As used herein, the term "phosphorus-based additive" refers to an additive including a compound containing the element phosphorus (P). Additionally, the term "silicon-based additive" refers to an additive including a silicon-containing compound, and more specifically may refer to an additive including an organosilicon compound.

The additive composition may be added to a thermal management fluid. The additive composition may be incorporated to suppress the propagation of fire from an electronic product (e.g., a battery) adjacent to the thermal management fluid to other products, components, or surrounding areas in the event of a fire. More specifically, the additive composition may enhance the chemical fire suppression capability of the thermal management fluid. For example, during thermal runaway of a battery, the ambient temperature may rapidly increase to a high temperature of 1,000°C or higher. Under such extreme thermal conditions, the additive composition of the present disclosure may prevent the propagation of fire to adjacent battery cells, thereby minimizing damage caused by battery thermal runaway.

Combustion of a material proceeds through chain reactions in which free radicals are continuously generated and consumed. During combustion, the phosphorus-based additive decomposes to generate radicals that function to remove surrounding free radicals. In other words, the phosphorus-based additive may contribute to preventing fire propagation by interrupting the chain reactions through scavenging highly reactive free radicals generated during thermal decomposition at high temperatures.

The type of phosphorus-based additive is not particularly limited, provided that it is capable of performing the function described above. From the perspective of immersion cooling, the phosphorus-based additive is likewise not particularly limited, so long as it can perform the above-described role without impairing the immersion cooling performance of a thermal management fluid applied to electronic products.

For example, the phosphorus-based additive may have a molecular weight of equal to or less than 500 g/mol. According to one embodiment, the molecular weight of the phosphorus-based additive may be 100 to 500 g/mol, specifically 100 to 400 g/mol, more specifically 100 to 300 g/mol, and still more specifically 150 to 300 g/mol. The phosphorus-based additive may be a small molecule (or a monomeric compound), an oligomer, or a polymer. Specifically, it may be a small molecule. When the additive is a small molecule, the molecular weight refers to a value calculated from the chemical formula. In the case of an oligomer or a polymer, the molecular weight refers to a weight average molecular weight. Additionally, for the oligomer or the polymer, the weight average molecular weight refers to a polystyrene-equivalent molecular weight measured by gel permeation chromatography (GPC).

According to another embodiment, the decomposition temperature of the phosphorus-based additive may be 150°C to 450°C, specifically 170°C to 300°C, more specifically 180°C to 250°C, and still more specifically about 200°C. When the ambient temperature reaches the decomposition temperature, the phosphorus-based additive may undergo thermal decomposition and perform a flame-retardant function. Whereas, when the molecular weight of the phosphorus-based additive exceeds the above-described range, the flame-retardant performance at about 200°C may degrade.

The phosphorus-based additive may include a phosphate-based compound. As used herein, the term "phosphate-based compound" refers to a compound containing phosphate. Specifically, the phosphate-based compound may be an organic phosphate compound. According to one embodiment, the phosphorus-based additive may be a phosphate-based compound. According to another embodiment, the phosphorus-based additive may include at least one phosphate-based compound.

In an embodiment in which the phosphorus-based additive includes a phosphate-based compound, the phosphorus-based additive may include a compound represented by Chemical Formula 1 below:

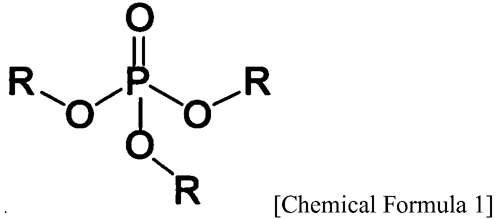

Here, three functional groups R are independent of one another. Each R may be hydrogen or a functional group having 1 to 30 carbon atoms. Specifically, the R may be hydrogen or a functional group having 1 to 26 carbon atoms; more specifically, hydrogen or a functional group having 1 to 12 carbon atoms; still more specifically, hydrogen or a functional group having 1 to 9 carbon atoms; and even more specifically, hydrogen or a functional group having 1 to 6 carbon atoms.

Additionally, at least one of the three R groups may not be hydrogen. In other words, at least one R may be a functional group having 1 to 30 carbon atoms. More specifically, all the three R groups may not be hydrogen.

Meanwhile, the functional group may be a hydrocarbyl group. From the viewpoint of chemical stability, the functional group may be an alkyl group. The functional group may also be linear, branched, or cyclic. According to another embodiment, the R may further include a heteroatom. For example, the R may further include O, N, S, P, B, F, Cl, Br, I, or a combination thereof. More specifically, the R may further include a halogen atom. In this case, the R may be a halogen-substituted alkyl group. More specifically, the R may further include fluorine (F).

Additionally, according to one embodiment, the total number of carbon atoms in the compound may be 1 to 30. This means that one molecule having the structure of Chemical Formula 1 contains 1 to 30 carbon atoms. Specifically, the total number of carbon atoms may be 1 to 24, more specifically 1 to 12, still more specifically 1 to 9, and even more specifically 1 to 6.

According to one embodiment, at least two of the three R groups may be identical functional groups. More specifically, all the three R groups may be identical functional groups.

The additive composition of the present disclosure further includes the silicon-based additive. The silicon-based additive may generate silica through an oxidative reaction during thermal decomposition. The silica thus formed may contribute to suppressing fire propagation by blocking oxygen in the air and inhibiting flames.

The type of silicon-based additive is not particularly limited, provided that it is capable of performing the function described above. From the perspective of immersion cooling, the silicon-based additive is likewise not particularly limited, so long as it can perform the above-described role without impairing the immersion cooling performance of a thermal management fluid applied to electronic products.

For example, the silicon-based additive may have a molecular weight of equal to or less than 2,000 g/mol. According to one embodiment, the molecular weight of the silicon-based additive may be 500 to 1,800 g/mol, specifically 500 to 1,600 g/mol, more specifically 600 to 1,500 g/mol, and still more specifically 700 to 1,400 g/mol.

According to another embodiment, the decomposition temperature of the silicon-based additive may be 150°C to 450°C, specifically 170°C to 320°C, more specifically 180°C to 300°C, and still more specifically 200°C to 270°C. When the ambient temperature reaches the decomposition temperature, the silicon-based additive may undergo thermal decomposition and perform a flame-retardant function. Whereas, when the molecular weight of the silicon-based additive deviates from the above-described range, the flame-retardant performance within the temperature range of 200°C to 270°C may degrade.

The silicon-based additive may include a polysiloxane compound. According to one embodiment, the silicon-based additive may be a polysiloxane compound. According to another embodiment, the silicon-based additive may include at least one polysiloxane compound. Specifically, the polysiloxane compound may be a polysiloxane compound in a liquid state at room temperature, and more specifically may be a silicone oil.

In an embodiment in which the silicon-based additive includes a polysiloxane compound, the silicon-based additive may include a compound represented by Chemical Formula 2 below:

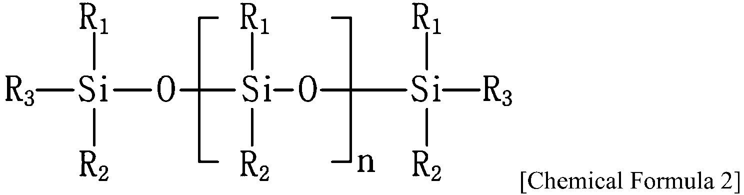

Here, functional group R₁, R₂, and R₃ may each independently be selected from the group consisting of hydrogen, a hydroxyl group, an alkyl group, an alkenyl group, an alkynyl group, an aryl group, and an alkoxy group. Additionally, in Chemical Formula 2 above, n is an integer of equal to or greater than 1.

The alkyl group may be a functional group having 1 to 10 carbon atoms, specifically 1 to 8 carbon atoms, more specifically 1 to 6 carbon atoms, and still more specifically 1 to 4 carbon atoms. Even more specifically, the alkyl group may be a methyl group or an ethyl group. The alkenyl group and alkynyl group may each be functional groups having 2 to 10 carbon atoms, specifically 2 to 8 carbon atoms, more specifically 2 to 6 carbon atoms, and still more specifically 2 to 4 carbon atoms. For example, the alkenyl group may be a vinyl group. According to one embodiment, the aryl group may be a phenyl group. The alkoxy group may be a functional group having 1 to 10 carbon atoms, specifically 1 to 8 carbon atoms, more specifically 1 to 6 carbon atoms, and still more specifically 1 to 4 carbon atoms. For example, the alkoxy group may be a methoxy group or an ethoxy group.

According to one embodiment, R₁, R₂, and R₃ may each independently be alkyl groups. More specifically, the R₁, R₂, and R₃ may all be identical alkyl groups. Still more specifically, the R₁, R₂, and R₃ may all be methyl groups.

According to another embodiment, the R₁ and R₂ may be different functional groups. Specifically, the R₁ may be an alkyl group and the R₂ may be an aryl group (and vice versa). In this case, the R₃ may be an alkyl group.

As described above, in Chemical Formula 2 above, n is an integer of equal to or greater than 1. According to one embodiment, the n may be 1 to 30, more specifically 3 to 20, and still more specifically 5 to 16. According to another embodiment, the n may be determined depending on the desired flash point of polysiloxane and the type of functional group selected. For example, when the R₁, R₂, and R₃ are all methyl groups, the n may be in a range of 8 to 16.

In the additive composition, the phosphorus-based additive and the silicon-based additive may be uniformly mixed in an appropriate ratio. According to one embodiment, a weight ratio of the phosphorus-based additive to the silicon-based additive in the composition may be 1:6 to 10:1. The simultaneous use of these two different additives allows the chemical fire suppression effect provided by the phosphorus-based additive and the oxygen-deprivation (smothering) fire suppression effect provided by the silicon-based additive to be achieved concurrently. However, when the weight ratio deviates from the above-described range, the flame-retardant effect resulting from addition of the additive composition may be reduced.

The use of the additive composition in a thermal management fluid may increase the flash point of the fluid. Additionally, such use may contribute to interrupting free-radical chain reactions and reducing the likelihood of contact with oxygen in air, thereby preventing fire propagation in the fluid.

According to one embodiment, the additive composition may satisfy a ΔFP (flash point difference) of at least 5°C. In other words, a thermal management fluid containing the additive composition may satisfy the above-described ΔFP. Here, the ΔFP is defined as: ΔFP = (flash point of a fluid containing the additive composition) - (flash point of a fluid not containing the additive composition). In the present disclosure, the flash point of the fluid is measured in accordance with ASTM D93. The ΔFP of the thermal management fluid is a value calculated when the content of the additive composition is 4 to 15 wt% based on the total weight of a thermal management fluid composition. Specifically, the ΔFP may be 5°C to 60°C, more specifically 10°C to 50°C, and still more specifically 15°C to 50°C.

The additive composition described above may be incorporated into a conventional thermal management fluid and is expected to, when thermal runaway occurs in an electronic product including a battery module, more effectively suppress fire propagation to adjacent battery cells within the module, thereby providing safety improvements such as prevention of large-scale fires. Additionally, since the additive composition improves the flash point of the thermal management fluid, base oils that were previously unsuitable for use in thermal management fluids due to low flash points may become usable. Accordingly, the additive composition is expected to provide the effect of broadening the selection range of base oils for thermal management fluids.

### Thermal Management Fluid Composition

Another aspect of the present disclosure provides a thermal management fluid composition including the above-described additives. Hereinafter, unless otherwise specified, the descriptions provided above with respect to the additives may be equally applicable, and redundant descriptions may be omitted.

The thermal management fluid composition includes a base oil, a phosphorus-based additive, and a silicon-based additive. The thermal management fluid composition possesses physical properties such as excellent electrical insulation performance and cooling performance, enabling direct contact with an electronic product to cool the electronic product. Accordingly, according to one embodiment, the fluid composition may be used for immersion cooling.

As the base oil, any conventional or future base oil suitable for use as a thermal management fluid may be employed. For example, the base oil may include mineral oil, synthetic oil, vegetable oil, or a combination thereof. The mineral oil refers to an oil derived from crude oil without undergoing a separate synthetic process. In the present disclosure, the mineral oil may include base oils corresponding to American Petroleum Institute (API) Groups I to III. The synthetic oil may include polyalphaolefin (PAO), gas-to-liquid (GTL) base oil, coal-to-liquid (CTL) base oil, or ester-based oil.

According to one embodiment, the fluid composition may include 85 to 98 wt% of the base oil, equal to or less than 10 wt% of the phosphorus-based additive, and equal to or less than 10 wt% of the silicon-based additive, based on the total weight of the composition. Here, the content of the base oil in the fluid composition may be 85 to 98 wt%. When the content of the base oil exceeds 98 wt%, the above-described additives may fail to perform their intended functions, thereby providing little benefit over the base oil alone. Whereas, when the content of the base oil is less than 85 wt%, the additives may not be fully dissolved in the base oil, which may degrade the performance of the additives.

The content of the phosphorus-based additive in the fluid composition may be equal to or less than 10 wt%. Specifically, the content may be greater than 0 to equal to or less than 10 wt%, more specifically 1 to 10 wt%, and still more specifically 1 to 9 wt%. From the viewpoint of improving fire propagation suppression performance, the content may be equal to or greater than 1 wt%. Whereas, when the content exceeds the above numerical range, the phosphorus-based additive may not be fully dissolved in the fluid composition and may remain in the form of droplets within the base oil. Such non-uniform dissolution of the phosphorus-based additive may cause a degradation in fire propagation prevention performance.

The content of the silicon-based additive in the fluid composition may be equal to or less than 10 wt%. Specifically, the content may be greater than 0 to 10 wt%, more specifically 0.5 to 10 wt%, and still more specifically 1 to 10 wt%. From the viewpoint of improving fire propagation suppression performance, the content may be equal to or greater than 1 wt%. Whereas, when the content exceeds the above numerical range, the silicon-based additive may not be fully dissolved in the fluid composition.

The fluid composition may further include an additive other than the additives described above. In the present disclosure, such an additional additive is referred to as a third additive in order to distinguish it from the phosphorus-based additive (first additive) and the silicon-based additive (second additive). The third additive is not particularly limited, provided that it is usable for improving the physical properties of the thermal management fluid composition. For example, the third additive may include an antioxidant, an antifoaming agent, a corrosion inhibitor, a detergent, a dispersant, a friction modifier, an antiwear agent, an extreme-pressure additive, a viscosity index improver, a pour-point depressant, a viscosity modifier, or any combination thereof.

The content of the third additive in the fluid composition may be equal to or less than 2 wt%. Specifically, the content may be 0.1 to 2 wt%, more specifically 0.5 to 2 wt%, and still more specifically 0.5 to 1.5 wt%.

As described above, the flash point of the fluid composition may be improved by the addition of the aforementioned additives. According to one embodiment, the flash point of the fluid composition may be at least 200°C. Specifically, the flash point may be 200°C to 250°C, more specifically 200°C to 240°C, and still more specifically 200°C to 230°C. If necessary, the fluid composition may employ a base oil having a relatively low viscosity. In this case, the flash point of the fluid composition may differ from the above-described range. Specifically, the flash point of the fluid composition may be less than 200°C.

the use of the thermal management fluid composition of the present disclosure, which includes the additives described above, may reduce the likelihood of fire propagation during battery thermal runaway in an electronic product not only through physical fire suppression such as oxygen deprivation (smothering), but also through chemical fire suppression. Accordingly, when used as an immersion-cooling thermal management fluid, the fluid composition is expected to mitigate damage in the event of a battery fire.

Additional description of the embodiments of the present disclosure will be provided below with reference to the specific experimental examples. However, the following examples and comparative examples included in the experimental examples are only given for illustrating the embodiments and do not limit the appended claims. It will be apparent to those skilled in the art that various modifications and alterations of the examples may be made without departing from the scope and spirit of the present disclosure. These modifications and alterations will fall within the appended claims.

### Example

### 1. Preparation of Thermal Management Fluid Composition

A thermal management fluid composition was prepared by combining a base oil and additives. As the base oil, YUBASE 3 was used, which has a flash point of about 184°C measured according to ASTM D93, a kinematic viscosity at 40°C of 12.4 cSt, and a kinematic viscosity at 100°C of 3.1 cSt. As a phosphorus-based additive, triethyl phosphate, having a flash point of about 124°C measured in accordance with ASTM D93, or tributyl phosphate, having a flash point of about 145°C measured in accordance with ASTM D93, was used. As a silicon-based additive, polydimethylsiloxane, having a kinematic viscosity of 10 cSt at 25°C and a flash point of about 170°C measured in accordance with ASTM D93, was used.

The content of each compositional component in Examples 1 to 3 and Comparative Examples 1 to 3 is presented in Table 1 below.

**TABLE 1**

| | Comparative Example 1 | Comparative Example 2 | Comparative Example 3 | Example 1 | Example 2 | Example 3 |
|---|---|---|---|---|---|---|
| Base oil | 100 wt% | 97.5 wt% | 90 wt% | 92 wt% | 87 wt% | 94.5 wt% |
| Triethyl phosphate | - | 2.5 wt% | - | 5 wt% | - | 2.5 wt% |
| Tributyl phosphate | - | - | - | - | 10 wt% | - |
| Polydimethylsiloxane | - | - | 10 wt% | 3 wt% | 3 wt% | 3 wt% |

### 2. Performance Evaluation of Prepared Thermal Management Fluid Compositions

### (1) Flash Point Measurement

The flash point of each of the fluid compositions of the above Comparative Examples and Examples was measured and the results are presented in Table 2 below. The flash point measurement was performed in accordance with ASTM D93.

### (2) Battery Cell Fire Propagation Test

Three cylindrical cells were installed at three locations among cell holders in a test module, and heating pads were attached to the surfaces of the cells. The assembled module was then fully immersed in each of the fluid compositions of Comparative Examples 1 and 3 and Examples 1 and 2. Subsequently, the heating pads were activated to sequentially induce thermal runaway and explosion of the three cells. During each explosion event, the flame size and flame duration were measured. The flame size (diameter) was determinded at the moment of maximum flame expansion, using explosion fooage recorded by a camera installed at the top of the test module. The results are presented in Table 2 below.

**TABLE 2**

| | Comparative Example 1 | Comparative Example 2 | Comparative Example 3 | Example 1 | Example 2 | Example 3 |
|---|---|---|---|---|---|---|
| Base oil | 100 wt% | 97.5 wt% | 90 wt% | 92 wt% | 87 wt% | 94.5 wt% |
| Flash point (°C) | 184 | 214 | 184 | 206 | 230 | 204 |
| Flame size (mm) | 130 | - | 150 | Barely observed | Barely observed | - |
| Flame duration (s) | 4.64 | - | 0.74 | 0.40 | 0.19 | - |

Referring to Table 2, it can be seen that the flash points of the Examples including the additive composition of the present disclosure were significantly increased compared to that of Comparative Example 1, which included no additive. It can be also found that use of the additive composition of the present disclosure in a thermal management fluid could reduce both the flame size and flame duration, thereby contributing to the prevention of fire propagation.

The additive composition of the present disclosure may be readily applicable to conventional thermal management fluids and is expected to contribute to preventing battery thermal runaway and fire propagation, particularly when utilized in immersion cooling of electronic products such as electric vehicles (EVs) or energy storage systems (ESS) including high-capacity batteries.

The foregoing description is merely an example of applying the principles of the present disclosure, and other configurations may be further included without departing from the scope of the present disclosure.

## Claims

1. An additive composition for a thermal management fluid, the additive composition comprising:
a phosphorus-based additive; and
a silicon-based additive.

2. The additive composition of claim 1, wherein the phosphorus-based additive has a molecular weight of 100 to 500 g/mol, preferably 100 to 400 g/mol, more preferably 100 to 300 g/mol, and even more preferably 150 to 300 g/mol.

3. The additive composition of claim 1 or 2, wherein the phosphorus-based additive includes a phosphate-based compound, preferably organic phosphate compound.

4. The additive composition according to any one of the preceding claims, wherein the phosphorus-based additive comprises a compound represented by Chemical Formula 1 below: 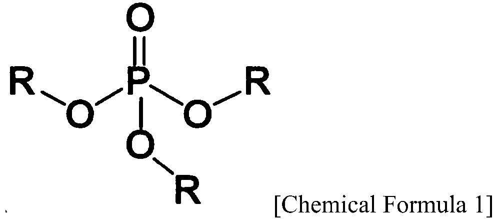
wherein each R is independently hydrogen or a functional group having 1 to 30 carbon atoms,
at least one R is not hydrogen, and
a total number of carbon atoms in the compound is 1 to 30.

5. The additive composition according to claim 4, wherein the functional group is a hydrocarbyl group.

6. The additive composition according to claim 5, wherein the functional group is an alkyl group, which optionally includes a heteroatom, preferably selected from O, N, S, P, B, F, Cl, Br, I, or a combination thereof, more preferably including a halogen atom, in particular F.

7. The additive composition according to any one of the preceding claims, wherein the silicon-based additive has a molecular weight of equal to or less than 2,000 g/mol, preferably 500 to 1,800 g/mol, more preferably 500 to 1,600 g/mol, even more preferably 600 to 1,500 g/mol, and still more preferably 700 to 1,400 g/mol.

8. The additive composition according to any one of the preceding claims, wherein the silicon-based additive comprises a compound represented by Chemical Formula 2 below: 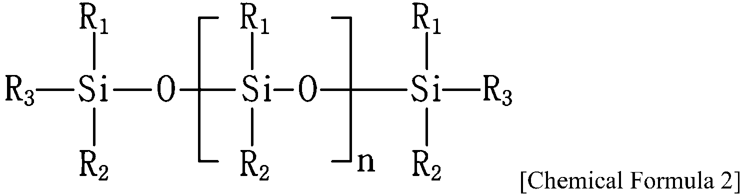
wherein functional groups R₁, R₂, and R₃ are each independently selected from the group consisting of hydrogen, a hydroxyl group, an alkyl group, an alkenyl group, an alkynyl group, an aryl group, and an alkoxy group, and
n is an integer of equal to or greater than 1, preferably 1 to 30, more preferably 3 to 20, even more preferably 5 to 16.

9. The additive composition of claim 8, wherein the R₁ is an alkyl group or an aryl group, and
the R₂ and R₃ are each independently alkyl groups.

10. The additive composition according to any one of the preceding claims, wherein a weight ratio of the phosphorus-based additive to the silicon-based additive is 1:6 to 10:1.

11. A thermal management fluid composition, comprising:
an additive composition according to one of claims 1 to 10, and
a base oil.

12. The thermal management fluid composition of claim 11, wherein the base oil comprises mineral oil, synthetic oil, vegetable oil, or a combination thereof.

13. The thermal management fluid composition of claim 11 or 12, comprising:
85 to 98 wt% of the base oil;
equal to or less than 10 wt% of the phosphorus-based additive; and
equal to or less than 10 wt% of the silicon-based additive.

14. The thermal management fluid composition according to any one of claims 11 to 13, wherein the thermal management fluid composition has a flash point of at least 200°C.

15. The thermal management fluid composition according to any one of claims 7-10, further comprising: a third additive,
wherein the third additive comprises an antioxidant, an antifoaming agent, a corrosion inhibitor, a detergent, a dispersant, a friction modifier, an antiwear agent, an extreme-pressure additive, a viscosity index improver, a pour-point depressant, a viscosity modifier, or a combination thereof.
